# EUROPÄISCHE PATENTSCHRIFT

(11) **EP 0 592 866 B1**
(45) Veröffentlichungstag und Bekanntmachung des Hinweises auf die Patenterteilung: **28.02.1996**
(21) Anmeldenummer: 93115686.3
(22) Anmeldetag: 29.09.1993
(51) Int. Cl.: D01H 4/40, F16L 37/088

(54) **Fadenabzugsrohr mit einer Aufnahme**
Yarn draw-off tube with a support
Tube de sortie de fil avec un support

(30) Priorität: 16.10.1992 DE 4235024
(43) Veröffentlichungstag der Anmeldung: 20.04.1994
(73) Patentinhaber: RIETER INGOLSTADT, SPINNEREIMASCHINENBAU AKTIENGESELLSCHAFT, D-85049 Ingolstadt (DE)
(72) Erfinder: Adalbert, Stephan, D-92339 Beilngries/Paulushofen (DE); Schermer, Josef, D-86673 Unterstall (DE)

(56) Entgegenhaltungen:
- DE-A- 2 538 258
- DE-A- 3 941 383
- US-A- 4 906 031
- PATENT ABSTRACTS OF JAPAN vol. 014, no. 134 (C-0701)14. März 1990 & JP-A-02 006 636 (DAIWABO CO LTD) 10. Januar 1990

## Beschreibung

Die Erfindung betrifft ein Fadenabzugsrohr gemäß dem Oberbegriff von Patentanspruch 1, sowie eine Aufnahme für ein Fadenabzugsrohr am Gehäuse einer Spinnbox einer Rotorspinnmaschine gemäß Anspruch 6.

Aus der EP 0200 092 B1, die die Oberbegriffe der Ansprüche 1 und 6 bildet, ist eine Offenend-Spinnvorrichtung bekannt, bei der am Deckel des Rotorgehäuses eine Abzugsdüse für das Abziehen des ersponnenen Fadens angeordnet ist, und bei der im Anschluß an die Fadenabzugsdüse ein Fadenabzugsrohr angeordnet ist. Der Deckel des Rotorgehäuses besitzt einen Schiebesitz, in dem das Fadenabzugsrohr radial geführt wird. Das Fadenabzugsrohr wird mittels einer Feder, die an dessen von der Fadenabzugsdüse abgewandten Seite angreift, axial gegen die Fadenabzugsdüse gedrückt. Aus der DE-A 25 38 258 ist eine Fadenabzugsdüse bekannt, die mit einer Buchse verbunden ist. Zum leichteren Ausbau der Fadenabzugsdüse wird bei deren Einbau eine Feder vorgespannt. Die Buchse wird mittels einer Klemmvorrichtung in ihrer Einbaulage festgehalten. Zum Ausbau wird die Klemmung durch Wegziehen oder Wegschrauben eines Klemmechanismus aufgehoben, wodurch die axial durch die Feder beaufschlagte Buchse mit der Fadenabzugsdüse aus der Aufnahme herausgedrückt wird.

Aus der deutschen, nicht vorveröffentlichten Patentanmeldung P 41 31 665.7 ist ein Deckel für eine Offenend-Rotorspinnvorrichtung bekannt, der auf seiner, dem Rotor zugewandten Seite eine Fadenabzugsdüse besitzt und an seiner vom Rotor abgewandten Seite eine Öffnung, in die ein Fadenabzugsrohr hineinreicht, durch das hindurch der Faden aus dem Rotorgehäuse herausgeführt werden kann. Das Fadenabzugsrohr wird in seiner axialen Position ähnlich wie bei der EP-0200 092 B1 durch ein elastisches Element gehalten, das das Fadenabzugsrohr mit Vorspannung in seiner axialen Position hält. Das elastische Element ist hier in Form einer Blattfeder ausgebildet, die zum Entfernen des Fadenabzugsrohres abgehoben und verschwenkt werden kann. Diese Art der Ausbildung eines Fadenabzugsrohres und seiner Fixierung am Rotordeckel hat den Nachteil, daß beim Austausch des Fadenabzugsrohres zunächst die Blattfeder verschwenkt werden muß, bevor das Fadenabzugsrohr entfernt und durch ein neues ersetzt werden kann. Dies ist insofern von Nachteil, weil die Rückseite des Rotordeckels durch eine Gehäuseabdeckung schwer zugänglich ist. Die Wartungsperson ist daher gezwungen, mit einer Hand die Feder abzuheben und mit der anderen Hand das Fadenabzugsrohr herauszuziehen bzw. ein neues Fadenabzugsrohr einzusetzen.

Die Aufnahme des Fadenabzugsrohres ist hier als rohrförmiges Teil ausgebildet, das an einer Montageplatte befestigt ist, an der der Deckel für die Spinnbox montiert ist. Die Aufnahme reicht axial bis in eine Bohrung des Rotordeckels hinein und führt das Fadenabzugsrohr radial während es axial über eine Blattfeder gehalten wird. Die Aufnahme für das Fadenabzugsrohr kann ebenso auch am Rotordeckel selbst befestigt oder ausgebildet sein wie dies in der EP 0200 092 B1 gezeigt ist.

Aus der DE-OS 25 38 258 ist ein Fadenabzugsrohr bekannt, das eine Fläche für den Angriff eines elastischen Elements besitzt. Das elastische Element dient hier dazu das Fadenabzugsrohr aus seiner Aufnahme herauszudrücken. Zur Demontage muß dazu ein Sicherungselement herausgeschraubt werden. Bei einer anderen Ausführung ist das Sicherungselement federbelastet.

Aufgabe der vorliegenden Erfindung ist es, ein Fadenabzugsrohr so auszubilden, daß es einfach ausgetauscht werden kann, insbesondere ohne Zuhilfenahme von Werkzeug und ohne daß dazu Sicherungselemente entfernt werden müssen und daß trotzdem das Fadenabzugsrohr sicher in seiner Position fixiert werden kann. Eine weitere Aufgabe der Erfindung besteht darin, eine Aufnahme für ein Fadenabzugsrohr so auszubilden, daß diese mit einem erfindungsgemäßen Fadenabzugsrohr zusammenarbeiten kann.

Die vorliegende Aufgabe wird erfindungsgemäß durch die Merkmale des Anspruchs 1 sowie durch die Merkmale des Anspruchs 6 gelöst.

Durch die erfindungsgemäße Ausgestaltung des Fadenabzugsrohres wird erreicht, daß eine Angriffsfläche für ein elastisches Element geschaffen wird, das das Fadenabzugsrohr radial beaufschlagt und dabei eine axiale Kraft erzeugt, die das Fadenabzugsrohr in Richtung beispielsweise einer Fadenabzugsdüse einer Offenend-Spinnvorrichtung drückt und sicher axial positioniert. Diese Ausbildung des Fadenabzugsrohres ermöglicht es, ein elastisches Element derart anzuordnen, daß dieses nicht entfernt oder verschwenkt werden muß, um das Fadenabzugsrohr aus seiner Aufnahme herauszuziehen. Das elastische Element gleitet vielmehr an der geneigten Fläche entlang, bis das Fadenabzugsrohr freikommt. Dazu ist es nicht erforderlich, das elastische Element von dem Fadenabzugsrohr abzuheben, weil dies durch die geneigte Fläche bei axialer Bewegung des Fadenabzugsrohres selbsttätig erfolgt. Zum Einführen und zum Herausziehen des Fadenabzugsrohres aus seiner Aufnahme ist Werkzeug nicht erforderlich. Es kann vielmehr mit einer Hand bewerkstelligt werden. Dies ist deshalb besonders vorteilhaft, weil das Fadenabzugsrohr an der Spinnbox einer Spinnmaschine schwer zugänglich ist. Besonders günstig ist es, wenn die Buchse des Fadenabzugsrohres zylinderförmig ausgebildet und die geneigte Fläche kegelförmig ausgestaltet ist. Dann ist es möglich, zunächst das Fadenabzugsrohr in seiner Aufnahme zu drehen und anschließend erst aus dieser herauszuziehen. Wird eine zweite geneigte Fläche an der Buchse angebracht, die entgegengesetzt geneigt ist und im Bereich der Stirnseite des Fadenabzugsrohres angeordnet ist, ist es besonders einfach dieses zu demontieren und insbesondere wieder zu montieren. Die geneigte Fläche drückt beim Einführen des Fadenabzugsrohres zunächst das elastische Element radial nach außen, so daß das Fadenabzugsrohr axial verschoben werden kann. Besonders günstig ist es, wenn die geneigte Fläche eine genügende axiale Ausdehnung besitzt, weil dadurch größere Toleranzen zugelassen werden können und trotzdem dafür gesorgt ist, daß das Fadenabzugsrohr in axialer Richtung richtig positioniert werden kann. Eine günstige Ausgestaltung erfährt das Fadenabzugsrohr, wenn eine Fläche vorgesehen ist, die quer zur Längsachse der Buchse parallel ausgebildet ist, denn dadurch ist es möglich, das Fadenabzugsrohr in seiner Aufnahme auf einfache Weise radial zu führen. Besonders günstig ist es, wenn diese Fläche als Mantelfläche eines Zylinders ausgebildet ist. Wird die Aufnahme für ein Fadenabzugsrohr entsprechend der vorgeschlagenen Erfindung ausgebildet, wird erreicht, daß auf einfache Weise die richtige axiale Position des Fadenabzugsrohres an der Spinnvorrichtung gesichert wird. Besonders günstig ist es dabei, wenn die Aufnahme eine Bohrung besitzt, deren Wandung einen Schlitz hat, in die quer zur Bohrung ein elastisches Element eingreift. Dadurch wird erreicht, daß das elastische Element in axialer Richtung fixiert ist, was durch die Wand der Aufnahme erfolgt und das elastische Element in radialer Richtung genügend weit in die Bohrung hineinreichen kann, um auf die geneigte Fläche der Fadenabzugsdüse einwirken zu können. Werden zwei gegenüberliegende Schlitze vorgesehen, kann auf einfache Art und Weise ein elastisches Element fixiert werden. Dies wird dann besonders günstig als U-förmiges Teil ausgebildet, so daß in jeden Schlitz je ein Schenkel hineinreicht. Dadurch wird erreicht, daß eine gleichmäßige Kraft in axialer Richtung auf das Fadenabzugsrohr ausgeübt wird. Gleichzeitig ist es möglich, das elastische Element seinerseits einfach zu fixieren.

Im folgenden wird die Erfindung anhand von zeichnerischen Darstellungen beschrieben. Es zeigen
- Figur 1: ein erfindungsgemäß ausgebildetes Fadenabzugsrohr im Schnitt
- Figur 2: ein erfindungsgemäßes Fadenabzugsrohr in seiner Aufnahme am Deckel einer Spinnbox im Schnitt
- Figur 3: eine rückwärtige Draufsicht auf die Montageplatte mit einer erfindungsgemäßen Aufnahme mit einem U-förmigen elastischen Element.

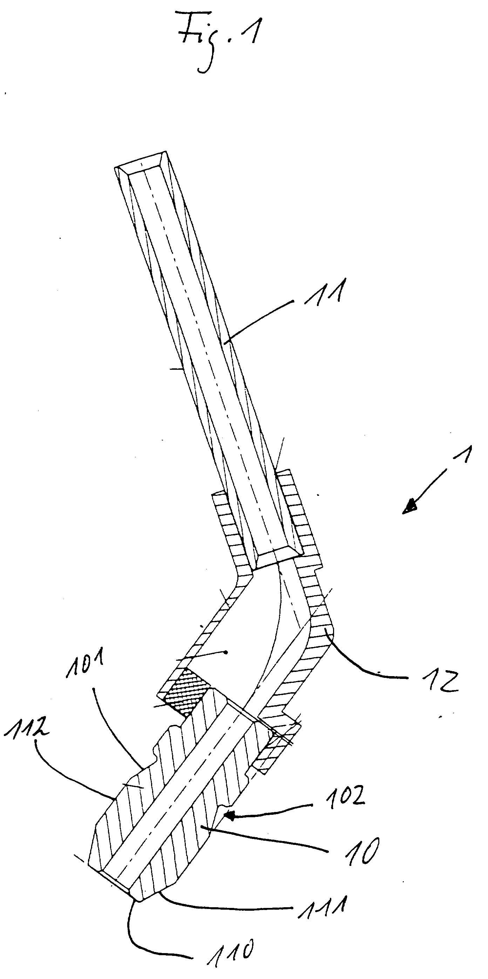

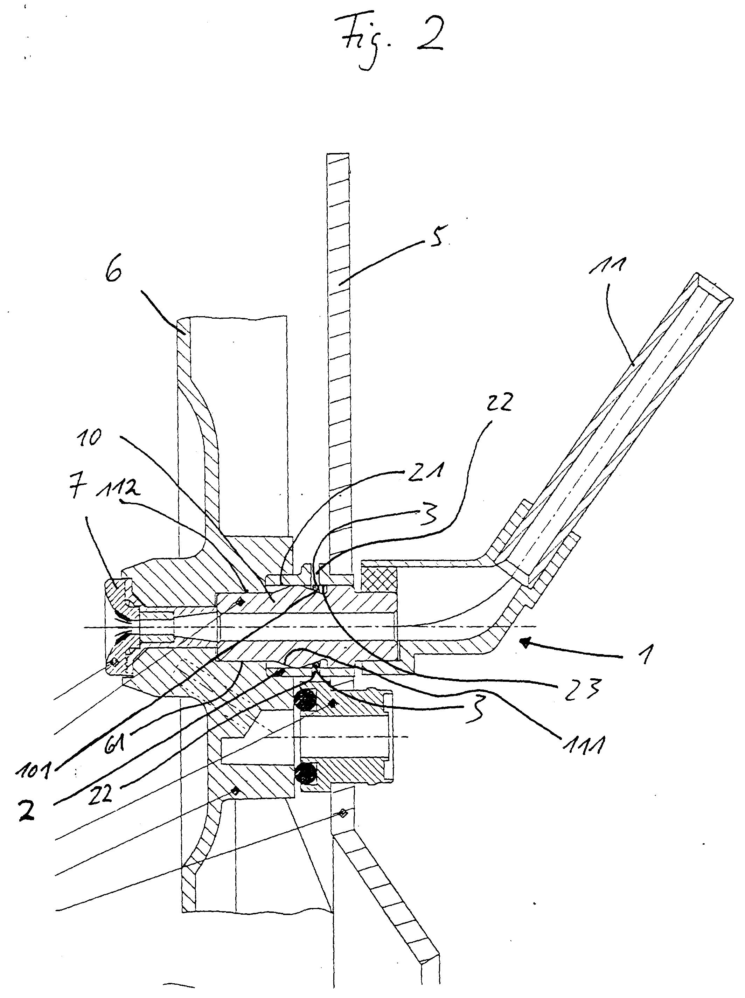

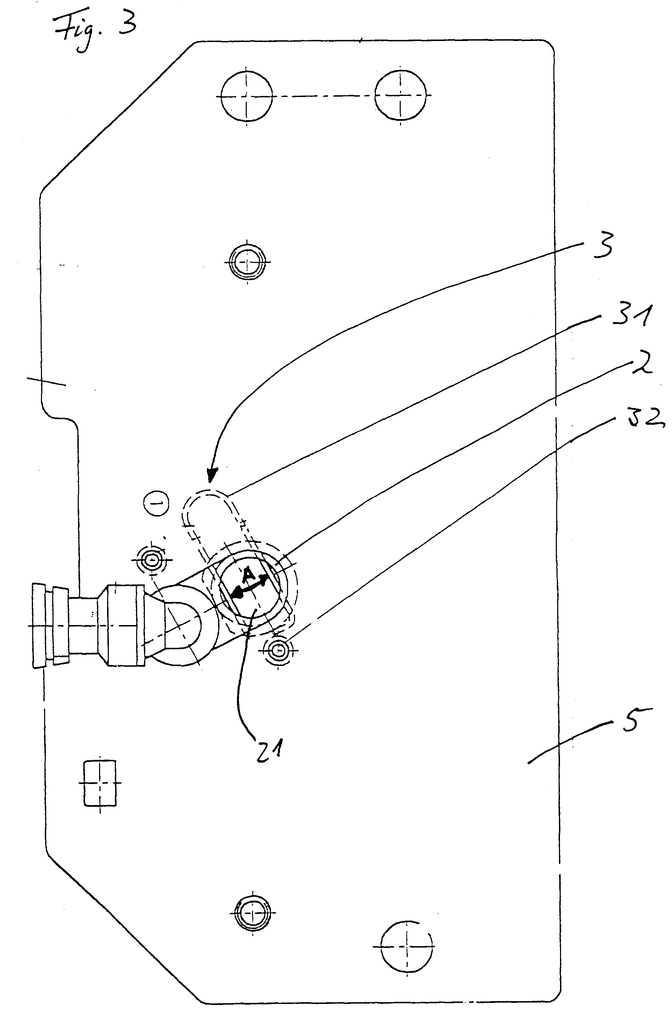

Figur 1 zeigt ein erfindungsgemäß ausgestaltetes Fadenabzugsrohr 1 im Schnitt. Dieses besteht aus seiner Buchse 10 und dem Fadenführungsrohr 11, das über ein Zwischenstück 12 mit der Buchse 10 verbunden ist. Mit seiner Stirnseite 110 ist das Fadenabzugsrohr in Richtung beispielsweise einer Fadenabzugsdüse einer Offenend-Spinnmaschine in dieser angeordnet (Figur 2). Das Fadenabzugsrohr 1 von Figur 1 besitzt eine Buchse 10, die als rotationssymmetrisches Teil ausgebildet ist. Zum Zwecke seiner axialen Positionierbarkeit besitzt das Fadenabzugsrohr 1 eine geneigte Fläche 101, die hier als kegelförmiger Abschnitt 102 ausgebildet ist. Auf diesen wirkt radial ein elastisches Element ein, so daß über die schiefe Ebene eine Kraft in axialer Richtung erzeugt wird, die das Fadenabzugsrohr 1 in Richtung seiner Stirnseite 110 drückt und damit axial in einer Aufnahme fixiert. Zwischen der geneigten Fläche 101 und der Stirnseite 110 besitzt das Fadenabzugsrohr 1 eine weitere Fläche 111, die hier kegelförmig ausgebildet ist. Diese dient dazu, beim Einführen des Fadenabzugsrohres 1 in seine Aufnahme ein in diese hineinragendes elastisches Element radial anzuheben, so daß das Fadenabzugsrohr axial bewegt werden kann. Figur 3 zeigt eine Aufnahme 2 ohne Fadenabzugsrohr aus der Position, wie sie sich darstellt, wenn ein Fadenabzugsrohr in die Aufnahme 2 eingeführt werden soll. Die Fläche 111 bewirkt, daß das Fadenabzugsrohr 1 in Richtung seiner Stirnseite im Durchmesser abnimmt, so daß es zwischen mehrere elastische Elemente bzw. ein U-förmig ausgebildetes elastisches Element, das in die Aufnahme 2 für das Fadenabzugsrohr 1 hineinreicht, eingeschoben werden kann, ohne daß es mit seiner Stirnseite 110 vom elastischen Element 3 blockiert wird. Dazu ist günstigerweise der Durchmesser der Stirnseite 110 kleiner ausgebildet, als der vom elastischen Element noch freigelassene Abstand (vergleiche Figur 3, A). Zwischen der Fläche 111 und der geneigten Fläche 101 besitzt das Fadenabzugsrohr 1 eine zu seiner Längsachse der Buchse parallele Fläche 112. Dadurch wird erreicht, daß das Fadenabzugsrohr 1 radial in seiner Aufnahme 2 geführt werden kann. Das in Figur 2 dargestellte Fadenabzugsrohr 1 besitzt eine Buchse 10, bei der die Fläche 112 sich in axialer Richtung gleich an die Stirnseite 110 anschließt. Die axiale Führung erfolgt also hier durch den Rotordeckel 6, der damit Teil der Aufnahme 2 für das Fadenabzugsrohr 1 wird.

Figur 2 zeigt ein erfindungsgemäßes Fadenabzugsrohr 1 in einer erfindungsgemäßen Aufnahme 2 gehalten, die an einer Montageplatte 5 befestigt ist, im Schnitt. An dieser ist ebenso der Rotordeckel 6, der Teil einer Offenend-Rotorspinnvorrichtung ist, befestigt. Die Aufnahme 2 geht teilweise in eine Bohrung 61 des Rotordeckels 6 über. Die radiale Führung des Fadenabzugsrohres 1 erfolgt also hier über die Wandung der Bohrung 61. Am Rotordeckel 6 ist die Fadenabzugsdüse 7 angeordnet, über die unmittelbar der in einem Rotor ersponnene Faden aus diesem abgezogen wird. Die übrigen Teile der Rotorbox und der Rotor selbst sind der Einfachheit halber nicht dargestellt, sie sind allgemeiner Stand der Technik. Die Aufnahme 2 besitzt zwei gegenüberliegende Schlitze 22, die die Wandung ihres rohrförmigen Rundkörpers aufschneiden, so daß ein radial in den Schlitz eingeführtes elastisches Element bis ins Innere der Bohrung 21 der Aufnahme 2 hineingreifen kann. Dadurch wird ermöglicht, daß das elastische Element 3 bis auf die geneigte Fläche 101 des Fadenabzugsrohres 1 reicht und eine radiale Kraft auf die geneigte Fläche 101 des Fadenabzugsrohres 1 ausübt, wodurch dieses in Richtung auf die Fadenabzugsdüse gedrückt wird. Die Aufnahme besitzt zwei Schlitze 22, die einander gegenüberliegen. Das elastische Element 3 ist hier als ein Federdraht ausgebildet, der tangential an der geneigten Fläche 101 des Fadenabzugsrohres 1 anliegt. Dadurch, daß das elastische Element U-förmig ausgebildet ist, wie dies in Figur 3 erkennbar wird, kann mit einem Bauteil erreicht werden, daß in jedem Schlitz 22 ein elastisches Element auf die geneigte Fläche 101 des Fadenabzugsrohres einwirkt. Gleichzeitig wird dadurch erreicht, daß das elastische Element 3 sich selbst in der Aufnahme 2 positioniert. Die Aufnahme 2 ist hier als eigenes Bauteil ausgebildet, das an der Montageplatte 5 befestigt ist und seine Fortsetzung in der Bohrung 61 des Rotordeckels 6 findet. Es ist jedoch auch möglich, die Aufnahme 2 als Teil der Montageplatte 5 oder im Rotordeckel 6 auszubilden.

Aus Figur 2 werden die Vorteile des erfindungsgemäß ausgestalteten Fadenabzugsrohres deutlich. Um dieses zu demontieren, ist es lediglich erforderlich, das Fadenabzugsrohr in Richtung von der Fadenabzugsdüse 7 weg aus seiner Aufnahme 2 herauszuziehen. Dabei wird das elastische Element 3 radial aufgeweitet, so daß das Fadenabzugsrohr 1 aus der Umklammerung des elastischen Elements 3 herausgezogen werden kann. Ebenso einfach ist das Einsetzen des Fadenabzugsrohres 1 in die Aufnahme 2. Die zur Achse der Buchse 10 parallele Fläche 112 besitzt einen geringeren Durchmesser als der Abstand zwischen den Schenkeln des elastischen Elements 3, so daß das Fadenabzugsrohr 1 zwischen diese eingeführt werden kann. Bei der Einführbewegung des Fadenabzugsrohres gleitet dann die Fläche 111 an den Teilen des elastischen Elements 3 entlang und drückt diese radial nach außen, so daß eine axiale Bewegung des Fadenabzugsrohres nicht blockiert wird. Bei weiterer Einführbewegung kommt das elastische Element 3 in den Bereich der geneigten Fläche 101, so daß dann eine axiale Kraft auf das Fadenabzugsrohr 1 aufgrund der auf die schiefe Ebene der geneigten Fläche 101 radial einwirkenden Kraft erzeugt wird. Dadurch ist das Fadenabzugsrohr 1 axial in seiner Aufnahme 2 positioniert. Die axiale Ausdehnung der geneigten Fläche ist so groß zu wählen, daß das Fadenabzugsrohr 1 seine Arbeitsposition erreicht, bevor das elastische Element 3 das Ende der geneigten Fläche erreicht. Ebenso ist darauf zu achten, daß auch, wenn das Fadenabzugsrohr axial in Position ist, das elastische Element noch genügend Kraft auf die geneigte Fläche 101 ausübt.

Ein Verdrehen des Fadenabzugsrohres 1 wird dadurch verhindert, daß das Fadenführungsrohr 11 durch eine Bohrung der Abdeckung der Spinnvorrichtung herausgeführt wird (nicht gezeigt). Ein Verdrehen des Fadenabzugsrohres 1 kann jedoch auch verhindert werden, indem beispielsweise die Buchse 10 nicht rotationssymetrisch ausgebildet wird.

Figur 3 zeigt eine Draufsicht der Montageplatte 5 der Figur 2 vom Fadenführungsrohr 11 aus gesehen. Das elastische Element 3 ist daher als ansich nicht sichtbares Teil größtenteils mit unterbrochenen Linien, gezeichnet. Durch die Schlitze 22 (vgl. Figur 2) greift das elastische Element 3 in die Bohrung 21 der Aufnahme 2 ein, so daß bei der Darstellung in Figur 3 dieser Teil des elastischen Elements 3 mit ununterbrochenen Linien gezeichnet ist. Das elastische Element 3 ist U-förmig ausgebildet und über einen Niet 32 an der Montageplatte 5 befestigt. Der Abstand A zwischen den beiden Schenkeln des elastischen Elements 3 ist so mit der Stirnseite 110 des Fadenabzugsrohres 1 abgestimmt, daß dieses zunächst beim Einsetzen in die Aufnahme 2 dazwischenpaßt und erst bei weiterer axialer Bewegung das elastische Element 3 zur Wirkung kommt. Dadurch wird vorteilhaft erreicht, daß das Fadenabzugsrohr 1 in die Aufnahme 2 eingeführt werden kann, ohne daß auf die Position eines elastischen Elements bzw. Befestigungsmittels Rücksicht genommen werden muß. Ein erfindungsgemäß ausgebildetes Fadenabzugsrohr ist jedoch auch in der Lage, beispielsweise wenn es selbst aus einem elastischen Material ausgebildet ist, mit einer Aufnahme zusammenzuarbeiten, die gemeinsam mit dem Fadenabzugsrohr einen Schnappverschluß bildet. In diesem Falle wäre das elastische Element beispielsweise durch einen starren Ringbund innerhalb der Aufnahme 2 ersetzt und die geneigte Fläche 101 wäre mit einer sehr großen Steigung bzw. als Durchmessersprung ausgebildet.

## Patentansprüche

1. Fadenabzugsrohr (1) für die Führung des Fadens aus dem Bereich der Fadenbildungszone, insbesondere aus dem Rotorgehäuse einer Offenend-Rotorspinnvorrichtung, mit einem Fadenführungsrohr (11) und einer Buchse (10) zur Aufnahme des Fadenführungsrohres (11), die eine Fläche für den Angriff eines elastischen Elements (3), das eine Kraft auf das Fadenabzugsrohr ausübt, für die Fixierung des Fadenabzugsrohres in einer Aufnahme (2) an einer Spinnmaschine besitzt, dadurch gekennzeichnet, daß die Fläche für den Angriff des elastischen Elements (3) als geneigte Fläche (101) ausgebildet ist, die in Bezug zur Längsachse der Buchse (10) in Richtung zum Fadenführungsrohr (11) hin geneigt ist, daß auf die geneigte Fläche (101) radial das elastische Element einwirkt, so daß der Angriff des elastischen Elements (3) in Folge der Neigung der Fläche (101) eine axiale Kraft auf das Fadenabzugsrohr (1) ausübt.

2. Fadenabzugsrohr nach Anspruch 1, dadurch gekennzeichnet, daß die Neigung der geneigten Fläche (101) so ausgebildet ist, daß die in Bezug auf die Achse der Buchse (10) radiale Kraft eines elastischen Elements eine axiale Kraft auf die Buchse (10) erzeugt.

3. Fadenabzugsrohr (1) nach Anspruch 1 oder 2, dadurch gekennzeichnet, daß die Buchse (10) zylinderförmig ist und die geneigte Fläche als kegelförmiger Abschnitt (102) ausgebildet ist, dessen kleinerer Durchmesser dem Fadenführungsrohr (11) zugewandt ist.

4. Fadenabzugsrohr (1) nach einem oder mehreren der Ansprüche 1 bis 3, dadurch gekennzeichnet, daß zwischen der Stirnseite (110) der Buchse (10) und der in Richtung zum Fadenführungsrohr (11) geneigten Fläche (101) eine Fläche (111) vorgesehen ist, deren Neigung in entgegengesetzte Richtung gerichtet ist.

5. Fadenabzugsrohr (1) nach einem oder mehreren der Ansprüche 1 bis 4, dadurch gekennzeichnet, daß zwischen der Stirnseite (110) der Buchse (10) und der in Richtung zum Fadenführungsrohr (11) geneigten Fläche (101) eine Fläche (112) vorgesehen ist, die in axialer Richtung parallel zur Längsachse der Buchse (10) verläuft.

6. Aufnahme (2) für ein Fadenabzugsrohr (1) nach einem der vorangegangenen Ansprüche, wobei die Aufnahme (2) sich an einer Spinnbox einer Offenend-Spinnmaschine befindet und die Aufnahme eine Bohrung (21) zur Führung des Fadenabzugsrohres (1) besitzt, dadurch gekennzeichnet, daß die Wand der Aufnahme (2) einen Schlitz (22) quer zur Bohrung besitzt, in den ein elastisches Element (3) eingreift, das radial bis über die Innenwand (23) der Bohrung (21) in diese hineinreicht.

7. Aufnahme (2) nach Anspruch 6, dadurch gekennzeichnet, daß die Aufnahme (2) zwei Schlitze (22) besitzt, die einander gegenüberliegen und quer zur Längsachse der Aufnahme (2) angeordnet sind.

8. Aufnahme (2) nach Anspruch 6 oder 7, dadurch gekennzeichnet, daß das elastische Element (3) U-förmig ausgebildet ist.

## Claims

1. A yarn draw-off tube (1) for conveying the yarn out of the region of the thread-forming zone, in particular, out of the rotor housing of an open-end rotor spinning machine, and having a yarn-conveying tube (11) and a bushing (10) - for receiving the yarn-conveying tube (11) - which has a surface for the engagement of a resilient member (3) for fixing the yarn draw-off tube in a support (2) on a spinning machine and which exerts a force on the yarn draw-off tube, **characterised in that** the surface for engaging the resilient member (3) is formed as an inclined surface (101) which slopes with respect to the longitudinal axis of the bushing (10) towards the yarn-conveying tube (11), and the resilient member acts radially on the inclined surface (101) so that the engagement of the resilient member (3) exerts an axial force on the yarn draw-off tube (1) as a result of the inclination of the surface (101).

2. A yarn draw-off tube according to Claim 1, **characterised in that** the inclination of the inclined surface (101) is formed in such a manner that the force - radial with respect to the axis of the bushing (10) - of a resilient member produces an axial force on the bushing (10).

3. A yarn draw-off tube (1) according to Claim 1 or 2, **characterised in that** the bushing (10) is cylindrical in shape and the inclined surface is formed as a tapering section (102) with its smaller diameter facing the yarn-conveying tube (11).

4. A yarn draw-off tube (1) according to one or more of Claims 1 to 3, **characterised in that** a surface (111) is provided between the end surface (110) of the bushing (10) and the surface (101) inclined towards the yarn-conveying tube (11) and the inclination of the surface (111) is directed in the opposite direction.

5. A yarn draw-off tube (1) according to one or more of Claims 1 to 4, **characterised in that** a surface (112) is provided between the end surface (110) of the bushing (10) and the surface inclined towards the yarn-conveying tube (11) and extends in the axial direction parallel to the longitudinal axis of the bushing (10).

6. A support (2) for a yarn draw-off tube (1) according to one of the preceding claims, wherein the support (2) is on a spinning box of an open-end spinning machine, and the support (2) has a bore (21) for guiding the yarn draw-off tube (1), **characterised in that** the wall of the support (2) has a slot (22) extending transversely to the bore, and a resilient member (3) engages in the slot and reaches radially beyond the inner wall (23) of the bore (21) into the bore.

7. A support (2) according to Claim 6, **characterised in that** the support (2) has two slots (22) which are opposite each other and are arranged transversely to the longitudinal axis ofthe support (2).

8. A support (2) according to claim 6 or 7, **characterised in that** the resilient member (3) is U-shaped.

## Revendications

1. Tube de sortie (1) servant au guidage du fil hors de la zone de la formation de fil, notamment hors du carter de rotor d'un dispositif à filer à rotors à fibres libérées, comportant un tube de guidage de fil (11) et une douille (10) destinée à recevoir le tube de guidage de fil (11) et qui comporte une surface pour l'action d'un élément élastique (3) exerçant une force sur le tube de sortie de fil dans le but de fixer le tube de sortie de fil dans un support (2) prévu sur un métier à filer, caractérisé en ce que la surface pour l'action de l'élément élastique (3) est conçue comme surface incliné (101) qui est inclinée par rapport à l'axe longitudinal de la douille (10) en direction vers le tube de guidage de fil (11); en ce que l'élément élastique agit de façon radiale sur la surface inclinée (101) de telle manière que l'action de l'élément élastique (3) exerce une force axiale sur le tube de sortie (1) de fil par suite de l'inclinaison de la surface (101).

2. Tube de sortie de fil selon la revendication 1, caractérisé en ce que l'inclinaison de la surface inclinée (101) est conçue de telle manière que la force radiale d'un élément élastique par rapport à l'axe de la douille (10) produit une force axiale sur la douille (10).

3. Tube de sortie (1) de fil selon la revendication 1 ou 2, caractérisé en ce que la douille (10) a une conformation cylindrique et que la surface inclinée est conçue comme partie conique (102) dont le plus petit diamètre est orienté vers le tube de guidage (11) de fil.

4. Tube de sortie (1) de fil selon une ou plusieurs des revendications 1 à 3, caractérisé en ce qu'entre le côté frontal (110) de la douille (10) et la surface inclinée (101) en direction vers le tube de guidage (11) de fil, il est prévu une surface (111) dont l'inclinaison est orientée en direction opposée.

5. Tube de sortie (1) de fil selon une ou plusieurs des revendications 1 à 4, caractérisé en ce qu'entre le côté frontal (110) de la douille (10) et la surface inclinée (101) en direction vers le tube de guidage (11) de fil, il est prévu une surface (112) qui s'étend en direction axiale parallèlement à l'axe longitudinal de la douille (10).

6. Support (2) pour un tube de sortie (1) de fil selon une des revendications précédentes, le support (2) étant disposé sur une unité de filage d'un métier à filer à fibres libérées et comportant un alésage (21) pour le guidage du tube de sortie (1) de fil, caractérisé en ce que la paroi du support (2) comporte transversalement à l'alésage une fente (22) dans laquelle s'engage un élément élastique (3) qui s'étend radialement jusqu'à l'intérieur de l'alésage (21) en dépassant la paroi intérieure (23) de l'alésage.

7. Support (2) selon la revendication 6, caractérisé en ce que le support (2) comporte deux fentes (22) opposées, disposées transversalement à l'axe longitudinal du support (2).

8. Support (2) selon la revendication 6 ou 7, caractérisé en ce que l'élément élastique (3) est. conformé en U.
